# EUROPEAN PATENT SPECIFICATION

(11) **EP 2 847 098 B1**
(45) Date of publication and mention of the grant of the patent: **06.07.2016**
(21) Application number: 12805759.3
(22) Date of filing: 21.09.2012
(51) Int. Cl.: B65D 85/804

(54) **CAPSULE**
KAPSEL
CAPSULE

(30) Priority: 10.05.2012 IT TV20120082
(43) Date of publication of application: 18.03.2015
(73) Proprietor: Hausbrandt Trieste 1892 SPA, 31040 Nervesa della Battaglia (TV) (IT)
(72) Inventor: ZANETTI, Fabrizio, I-31020 Villorba (Treviso) (IT)
(74) Representative: Dragotti, Gianfranco
(86) International application number: PCT/IB2012/055029
(87) International publication number: WO 2013/167940

(56) References cited:
- EP-A1- 0 211 511
- WO-A1-2004/087529
- WO-A1-2009/081436
- WO-A1-2011/080022
- ES-A1- 2 234 445

## Description

The present invention relates a single-dose capsule suitable for containing coffee or some other raw material for alimentary use, normally used for the production of beverages.

In the description below particular reference will be made to capsules containing coffee powder, it being clearly understood that the present invention also refers to other alimentary raw materials generally used in the production of beverages, both by means of percolation and by means of infusion, such as teas or infusions.

Capsules of the known type generally comprise a body made of polymer material and produced in a manner known per se, for example by means of an injection-moulding process.

A capsule according to the prior art is described for example in European patent EP 1608569 in the name of the same Applicant. The capsule according to the prior art comprises a casing with a slightly frustoconical shape which may be manufactured by means of thermoforming of a sheet of polypropylene for alimentary use or by means of injection-moulding. The casing has a continuous perimetral top edge projecting towards the outside of the capsule in the radial direction and a perimetral bottom edge.

The capsule also comprises a bottom provided with at least one hole through which the beverage being prepared is able to pass.

The top perimetral edge and the bottom perimetral edge are sealed, respectively, with a top foil and a bottom foil, both made of aluminium, or other material for alimentary use known per se.

In this description, the expression "sealing an edge" is understood as meaning applying a foil to the top edge or bottom edge of the capsule so that there is no fluid communication between the inside and outside of the capsule through this foil. In a manner known per se, in fact, the edges sealed by means of the foils prevent the coffee powder from losing its organoleptic properties when it comes into contact with the air.

The bottom divides the inside of the capsule into two zones:
- a first zone, bounded by the top foil, the side wall and the bottom; and
- a second zone, bounded by the bottom, the side wall of the capsule and the bottom foil.

The first zone contains the powdery substance, while the second zone is intended to collect temporarily the beverage before it leaves the capsule.

This type of capsule is well-known and envisages the use of a machine provided with means for perforating the top foil of the capsule, able to create a plurality of holes through which hot water is injected inside the top chamber at a very high pressure, for example of between 7 and 9 bar. A punch creates a spout on the second foil of the capsule, in the region of the central cusp, just before percolation of the beverage through the holes commences. Owing to the combined effect of the pressurised hot water supplied into the top chamber and the form of the bottom wall, the beverage fills the bottom chamber with a turbulent movement which favours emulsification of the fatty substances.

The prior art is also disclosed in WO2011/080022, ES2234445, WO2009/081436, EP0211511, and WO 2004/087529.

Capsules of this type, although widely used, are not without drawbacks.

In fact, separation of the top foil and the bottom foil is not easy since the foil is welded to the edge of the capsule, precisely along its edge. Rapid and efficient separation would, however, be desirable, in order to obtain proper sorting of the waste formed by the used capsule. In fact, for example if the foils were made of aluminium, they would be totally recyclable.

The object of the present invention is therefore to overcome, at least partly, the drawbacks of the prior art.

A first task of the present invention is to provide a capsule in which separation of the foils from the capsule casing, for example the aluminium component from the polymer component, is facilitated.

A second task of the present invention is to provide a capsule which may be easily disposed of as totally recyclable waste.

The object and tasks are achieved with a single-dose capsule for the preparation of a beverage from a powdery or granular raw material, according to claim 1.

The further advantages and characteristic features of the present invention will become clear from the detailed description which follows of a number of examples of embodiment, provided by way of a non-limiting example, with reference to the accompanying drawings in which:
Fig. 1 shows a cross-sectional view, along an axial section plane, of a first embodiment of a capsule according to the present invention;
Fig. 2 shows a cross-sectional view, along an axial section plane, of a second embodiment of a capsule according to the present invention;
Fig. 3 shows a cross-sectional view, along an axial section plane, of a third embodiment of a capsule according to the present invention;
Fig. 4 shows a perspective view of a capsule according to the present invention;
Fig. 5 shows a side view of a capsule according to the present invention; and
Fig. 6 shows a cross-sectional view, along an axial section plane, of a capsule according to the present invention.

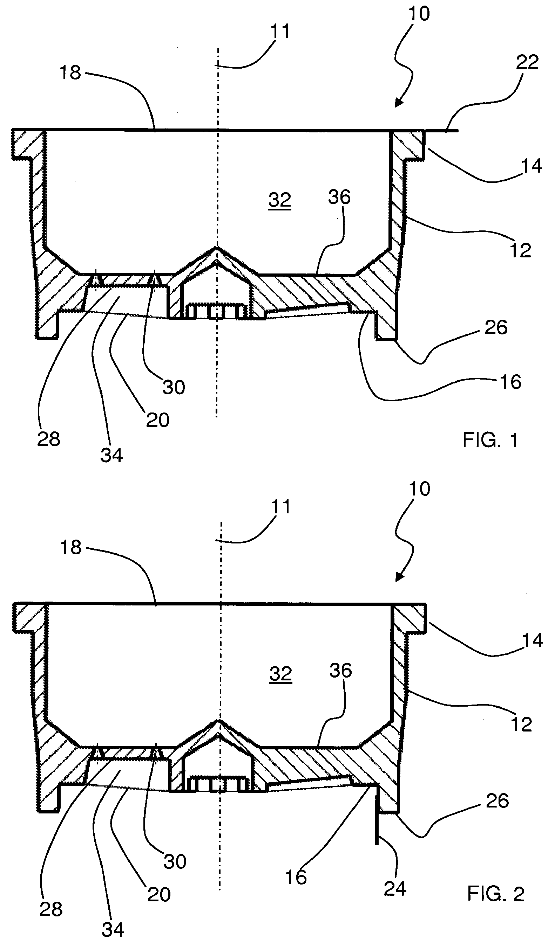

With reference to Figure 1 the following are defined:
- an axial direction, parallel to the direction of the main axis 11 of the capsule; and
- a radial direction perpendicular to and passing through the main axis 11 of the capsule.

Figure 1 shows a capsule 10 for the preparation of a beverage from a powdery or granular raw material according to the present invention.

The capsule 10 comprises a body 12 made of polymer material with a top edge 14 and a bottom edge 16. At least one of said top edge 14 and said bottom edge 16 is provided with a foil 18, 20 suitable for sealing the at least one edge 14, 16.

The at least one foil 18, 20 is suitable for being pierced or torn before or during the beverage preparation step by a dispensing machine (not shown).

The capsule according to the present invention is characterized in that the at least one foil 18, 20 is provided with a tongue 22, 24.

According to a first embodiment of the present invention, shown in Figure 1, the capsule 10 comprises a top foil 18 suitable for sealing the top edge 14. The top foil 18 comprises a first tongue 22 projecting from the top edge 14.

According to a possible embodiment of the present invention, shown in Figure 2, the capsule 10 comprises a bottom foil 20 suitable for sealing the bottom edge 16. The bottom foil 20 comprises a second tongue 24 projecting from the bottom edge 16.

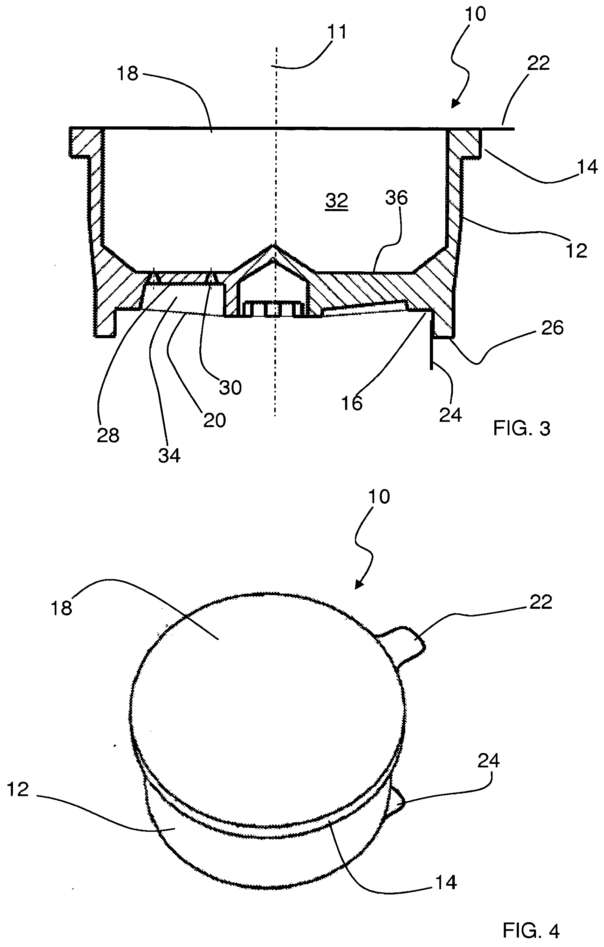

According to a possible embodiment of the present invention, shown in Figure 3, the capsule 10 according to the present invention comprises the first tongue 22 of the top foil 18 and the second tongue 24 of the bottom foil 20.

In the embodiments shown in Figure 1-3, the capsule according to the present invention, along the bottom edge, has a projection 26 in the axial direction towards the outside of the capsule 10 which, following the external perimeter of the bottom edge 16, forms a circular rim.

The tongues 22, 24 may be made of the same material as the top foil 18 and hence be projections which are not welded to the respective edges 14, 16 of the capsule 10.

In the possible embodiments shown in Figures 1 and 3, the first tongue 22 of the top film 18 projects in the radial direction. Advantageously, according to a possible embodiment of the present invention, the first tongue 22 may be folded over towards the outer surface of the body 12.

In the possible embodiments shown in Figures 2 and 3, the second tongue 24 of the bottom film 20 projects in the axial direction towards the outside of the capsule. Advantageously, according to a possible embodiment of the present invention, the second tongue 24 may be folded, for example in the radial direction or towards the outer surface of the projection 26.

According to a possible embodiment of the present invention, the tongue 22, 24 may be provided with a rigid part (not shown) for facilitating gripping thereof.

The body of the capsule 10 according to the present invention comprises a bottom wall 28 provided with at least one hole 30.

According to the present invention, a top chamber 32 which is suitable for containing the powdery or granular raw material and inside which percolation or infusion is performed, is defined between the top foil 18 and the bottom wall 28.

Advantageously the bottom wall 28 of the capsule 10 may be in an inset position with respect to the bottom edge 16 of the capsule 10 so that the bottom edge 16 projects from the bottom wall 28 of the capsule 10 in the axial direction.

A bottom chamber 34 is therefore created between bottom foil 20 and bottom wall 28, said chamber being suitable for being filled with the beverage supplied via the holes 30 before it is discharged directly into an underlying container via a spout created at the moment of piercing or tearing of the said bottom foil 20.

The bottom wall 28, on its surface facing the inside of the top chamber 32, is provided with a filter 36 which consists of a sheet of material which is permeable, but suitable for retaining the powdery substance which is situated inside the top chamber 32.

The filter may be made of paper or other material which per se is well known to the person skilled in the art.

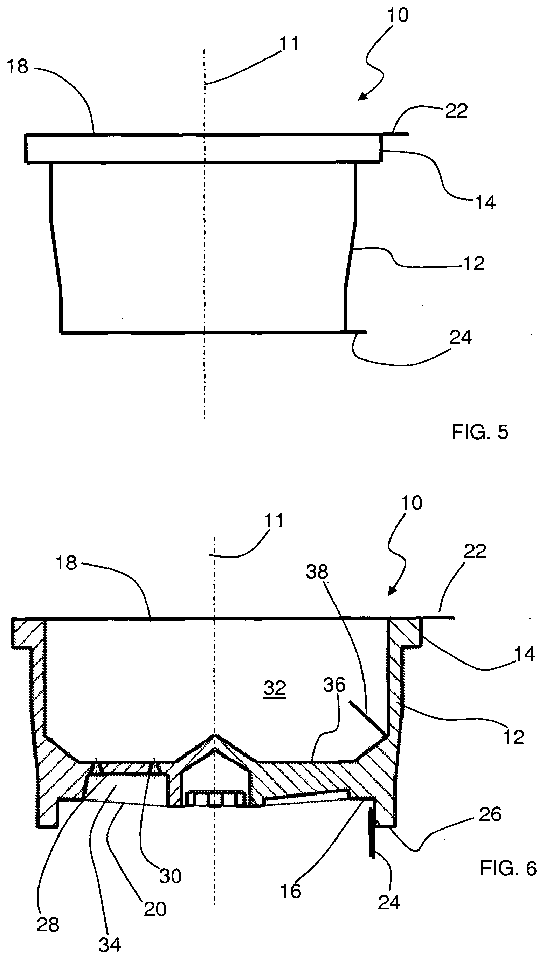

According to the present invention, shown in Figure 6, the filter 36 is provided with a filter tongue 38 so that it can be easily detached from the bottom 28 of the capsule 10.

As the person skilled in the art may easily understand, the capsule according to the invention achieves the stated object.

In particular, in the capsules according to the present invention, separation of the foils from the capsule body, i.e. for example the aluminium component from the polymer component, is facilitated.

Moreover, the capsule may be easily disposed of as totally recyclable waste.

Advantageously it is possible to separate and dispose of separately the plastic body, the aluminium foils, the paper filter and the coffee powder.

With regard to the embodiments described above, the person skilled in the art may, in order to satisfy specific requirements, make modifications to and/or replace elements described with equivalent elements, without thereby departing from the scope of the accompanying claims.

For example, embodiments may be provided where each foil has two or more tongues.

## Claims

1. Capsule (10) for the preparation of a beverage from a powdery or granular raw material, comprising a body (12) made of polymer material, said body (12) having a top edge (14) and a bottom edge (16), at least one of said top edge (14) and said bottom edge (16) being provided with a foil (18, 20) suitable for sealing said at least one edge (14, 16); the body (12) comprising a bottom wall provided with at least one hole (30), and a top chamber (32) defined between a top foil (18) and the bottom wall (28);
said foil (18, 20) being provided with a tongue (22, 24),
said top chamber being provided with a filter (36) applied onto the bottom wall (28) and consisting of a sheet of permeable material,
said capsule being **characterized in that** the filter (36) is provided with a filter tongue (38).

2. Capsule (10) according to claim 1, **characterized in that** a top foil (18), suitable for sealing the top edge (14) of said capsule (10), is provided with a first tongue (22).

3. Capsule (10) according to any one of the preceding claims, **characterized in that** a bottom foil (20), suitable for sealing the bottom edge (16) of said capsule (10), is provided with a second tongue (24).

4. Capsule (10) according to any one of the preceding claims, **characterized in that** the body (12) comprises a bottom wall (28) provided with at least one hole (30), in an inset position with respect to the bottom edge (16), so that the bottom edge (16) projects from the bottom wall (28) in the axial direction.

5. Capsule (10) according to claim 4, **characterized in that** a top chamber (32) is provided between said top foil (18) and said bottom wall (28); and a bottom chamber (34) is provided between said bottom foil (20) and the bottom wall (28); said top chamber (32) being suitable for containing the powdery or granular raw material; said bottom chamber (34) being suitable for collecting the beverage before it is dispensed.

6. Capsule (10) according to any one of the preceding claims, **characterized in that** said foils (18, 20) are made of aluminium.

## Patentansprüche

1. Kapsel (10) für die Zubereitung eines Getränks aus einem pulverförmigen oder körnigen Rohmaterial, aufweisend einen aus Polymermaterial hergestellten Körper (12), wobei der Körper (12) einen oberen Rand (14) und einen unteren Rand (16) hat, wobei zumindest einer von dem oberen Rand (14) und dem unteren Rand (16) mit einer zum Versiegeln des mindestens einen Randes (14, 16) geeigneten Folie (18, 20) versehen ist; wobei der Körper (12) eine mit zumindest einem Loch (30) versehene untere Wand und eine zwischen einer oberen Folie (18) und der unteren Wand (28) begrenzten oberen Kammer (32) aufweist;
wobei die Folie (18, 20) mit einer Zunge (22, 24) versehen ist,
wobei die obere Kammer mit einem auf der unteren Wand (28) angebrachten und aus einem Blatt aus durchlässigem Material bestehenden Filter (36) versehen ist,
wobei die Kapsel **dadurch gekennzeichnet ist, dass** das Filter (36) mit einer Filterzunge (38) versehen ist.

2. Kapsel (10) gemäß Anspruch 1, **dadurch gekennzeichnet, dass** eine zum Versiegeln des oberen Randes (14) der Kapsel (10) geeignete obere Folie (18) mit einer ersten Zunge (22) versehen ist.

3. Kapsel (10) gemäß einem der vorstehenden Ansprüche, **dadurch gekennzeichnet, dass** eine zum Versiegeln des unteren Randes (16) der Kapsel (10) geeignete untere Folie (20) mit einer zweiten Zunge (24) versehen ist.

4. Kapsel (10) gemäß einem der vorstehenden Ansprüche, **dadurch gekennzeichnet, dass** der Körper (12) eine mit zumindest einem Loch (30) versehene untere Wand (28) aufweist, die bezüglich dem unteren Rand (16) zurückspringt, sodass der untere Rand (16) von der unteren Wand (28) in axialer Richtung vorspringt.

5. Kapsel (10) gemäß Anspruch 4, **dadurch gekennzeichnet, dass** eine obere Kammer (32) zwischen der oberen Folie (18) und der unteren Wand (28) vorgesehen ist; und dass eine untere Kammer (34) zwischen der unteren Folie (20) und der unteren Wand (28) vorgesehen ist; wobei die obere Kammer (32) geeignet ist, das pulverförmige oder körnige Rohmaterial zu enthalten; wobei die untere Kammer (34) geeignet ist, das Getränk zu sammeln bevor es abgegeben wird.

6. Kapsel (10) gemäß einem der vorstehenden Ansprüche, **dadurch gekennzeichnet, dass** die Folien (18,20) aus Aluminium hergestellt sind.

## Revendications

1. Capsule (10) pour la préparation d'une boisson à partir d'une matière première en poudre ou granulaire, comprenant un corps (12) réalisé avec un matériau polymère, ledit corps (12) ayant un bord supérieur (14) et un bord inférieur (16), au moins l'un parmi ledit bord supérieur (14) et ledit bord inférieur (16) étant prévu avec une feuille de métal (18, 20) appropriée pour sceller ledit au moins un bord (14, 16) ; le corps (12) comprenant une paroi inférieure prévue avec au moins un trou (30) et une chambre supérieure (32) définie entre une feuille de métal supérieure (18) et la paroi inférieure (28) ;
ladite feuille de métal (18, 20) étant prévue avec une languette (22, 24),
ladite chambre supérieure étant prévue avec un filtre (36) appliqué sur la paroi inférieure (28) et se composant d'une feuille en matériau perméable,
ladite capsule étant **caractérisée en ce que** le filtre (36) est prévu avec une languette de filtre (38).

2. Capsule (10) selon la revendication 1, **caractérisée en ce qu'**une feuille de métal supérieure (18) appropriée pour sceller le bord supérieur (14) de ladite capsule (10), est prévue avec une première languette (22).

3. Capsule (10) selon l'une quelconque des revendications précédentes, **caractérisée en ce qu'**une feuille de métal inférieure (20), appropriée pour sceller le bord inférieur (16) de ladite capsule (10), est prévue avec une seconde languette (24).

4. Capsule (10) selon l'une quelconque des revendications précédentes, **caractérisée en ce que** le corps (12) comprend une paroi inférieure (28) prévue avec au moins un trou (30), dans une position incrustée par rapport au bord inférieur (16), de sorte que le bord inférieur (16) fait saillie de la paroi inférieure (28) dans la direction axiale.

5. Capsule (10) selon la revendication 4, **caractérisée en ce qu'**une chambre supérieure (32) est prévue entre ladite feuille de métal supérieure (18) et ladite paroi inférieure (28) ; et une chambre inférieure (34) est prévue entre ladite feuille de métal inférieure (20) et la paroi inférieure (28) ; ladite chambre supérieure (32) étant appropriée pour contenir la matière première en poudre ou granulaire ; ladite chambre inférieure (34) étant appropriée pour collecter la boisson avant qu'elle ne soit distribuée.

6. Capsule (10) selon l'une quelconque des revendications précédentes, **caractérisée en ce que** lesdites feuilles de métal (18, 20) sont réalisées à partir d'aluminium.
